# FASCICULE DE BREVET EUROPEEN

(11) **EP 2 880 451 B1**
(45) Date de publication et mention de la délivrance du brevet: **10.08.2016**
(21) Numéro de dépôt: 13716015.6
(22) Date de dépôt: 16.04.2013
(51) Int. Cl.: G01P 5/14, G01P 5/26, G01S 17/58, G01P 21/02, G01S 17/02, G01S 7/481

(54) **SYSTÈME DE SONDE, SONDE MIXTE DE RÉFÉRENCE PRIMAIRE POUR AÉRONEF, AÉRONEF ET PROCÉDÉ DE MESURE ASSOCIÉS**
SONDENSYSTEM, SONDE MIT GEMISCHTER PRIMÄRER REFERENZ FÜR EIN FLUGZEUG, ENTSPRECHENDES FLUGZEUG UND MESSVERFAHREN
PROBE SYSTEM, MIXED PRIMARY REFERENCE PROBE FOR AN AIRCRAFT, ASSOCIATED AIRCRAFT AND MEASURING METHOD

(30) Priorité: 31.07.2012 FR 1202153
(43) Date de publication de la demande: 10.06.2015
(73) Titulaire: THALES, 92200 Neuilly-sur-Seine (FR)
(72) Inventeur: GENEVRIER, Gilles, F-26027 Valence Cedex (FR); LEDAIN, Bernard, F-26027 Valence Cedex (FR); MANDLE, Jacques, F-26027 Valence Cedex (FR); SCHLOTTERBECK, Jean-Pierre, F-26027 Valence Cedex (FR)
(74) Mandataire: Blot, Philippe Robert Emile
(86) Numéro de dépôt international: PCT/EP2013/057929
(87) Numéro de publication internationale: WO 2014/019720

(56) Documents cités:
- EP-A1- 2 453 244
- FR-A1- 2 891 368
- US-A- 5 259 234
- US-A- 5 585 557

## Description

La présente invention concerne un système de sonde pour aéronef comprenant :
- une embase destinée à être fixée sur la carlingue d'un aéronef, et
- une pluralité de prises de pression statique régulièrement espacées, ménagées à travers l'embase et destinées à être raccordées à des moyens de mesure de la pression.

En aéronautique, le pilotage d'un aéronef repose sur la connaissance des références primaires de celui-ci. Ces références comprennent entre autres sa vitesse par rapport à l'air ambiant, son altitude et son incidence.

Ces références sont déterminées via des sondes situées sur la carlingue de l'aéronef. De manière connue, ces sondes peuvent comprendre des sondes de Pitot et des sondes de pression statique respectivement pour la mesure des pressions totale et statique, ainsi que des sondes d'incidence et des sondes anémométriques laser dites sondes « LIDAR » qui émettent et reçoivent un rayonnement laser selon un ou plusieurs axes.

Ces sondes sont alors raccordées à des moyens de mesure et de calcul de la grandeur correspondante comme l'altitude de l'aéronef, son incidence, sa vitesse relative par rapport à l'air, etc.

Les mesures réalisées sont ensuite regroupées et affichées sur un écran de l'EFIS (Electronic Flight Instrument System) qui constitue une source d'information centrale à partir de laquelle le pilotage de l'aéronef est effectué.

De manière connue, les sondes d'incidence et de Pitot se présentent sous la forme de palettes et de tubes protubérants de la peau de l'aéronef.

De ce fait, elles sont exposées à des facteurs météorologiques ou mécaniques qui peuvent en altérer le fonctionnement.

Ces facteurs comprennent par exemple :
- le bouchage des orifices des sondes par de la poussière ou des insectes,
- le foudroiement
- les chocs aviaires en vol,
- les chocs mécaniques se produisant au sol.

Comme le montrent les bases de données de recensement des incidents en aéronautique, ces facteurs sont à l'origine de défaillances des sondes protubérantes. Ces défaillances peuvent se traduire par des mesures erronées.

Afin de pallier ces problèmes, les règles de certification en aéronautique imposent de disposer de moyens de mesures des références primaires redondants sur l'appareil.

Les solutions couramment utilisées consistent à disposer de sondes de secours, ou combiner une sonde redondante à une sonde préexistante.

Ainsi, la plupart des aéronefs dont la cabine n'est pas pressurisée disposent d'une sonde de pression statique de secours accessible depuis la cabine de pilotage et qui peut être enclenchée en cas de défaillance.

En outre, il existe des sondes multifonctions combinant par exemple des sondes de pression statique et totale avec une sonde de température.

Toutefois, ces solutions ne donnent pas entière satisfaction.

En effet, les sondes redondantes existantes sont pour la plupart de type protubérant, et par conséquent présentent des risques de défaillance de même nature que les sondes qu'elles sont destinées à suppléer.

Enfin, la combinaison d'une sonde à une sonde préexistante peut imposer de procéder à une nouvelle certification de la sonde résultante si sa géométrie est modifiée.

L'objet de l'invention est donc d'obtenir une sonde de référence primaire supplémentaire pour l'aéronef qui n'implique pas de modifier la peau de l'aéronef et qui n'implique pas la reprise de certification des sondes existantes.

A cet effet, l'invention concerne un système de sonde du type précité, caractérisé en ce qu'il comprend au moins une fenêtre optique transparente à un rayonnement laser et insérée dans l'embase.

En outre, l'invention peut comprendre une ou plusieurs des caractéristiques suivantes, prises isolément ou selon toute combinaison techniquement possible :
- la fenêtre optique présente une face externe affleurant une surface externe de l'embase ;
- la fenêtre optique comprend un hublot réalisé à partir de verre transparent aux rayonnements infrarouges ;
- la fenêtre optique comprend des moyens d'étanchéification comprenant un joint inséré entre l'embase et le hublot, et le joint est réalisé à partir d'un matériau de coefficient de dilatation thermique inférieur au coefficient de dilatation thermique du matériau de l'embase ;
- la fenêtre optique comprend des moyens d'étanchéification comprenant un insert solidaire de l'embase et dans lequel est reçu le hublot, la différence entre le coefficient de dilatation thermique de l'insert et celui du hublot étant avantageusement inférieure à 100%;
- l'embase définit un orifice de réception de la fenêtre optique, le hublot étant maintenu par engagement mécanique dans l'orifice de réception ;
- il comprend des moyens de fixation de la fenêtre optique sur l'embase, ces moyens de fixation comprenant une bride de retenue pour la retenue de la fenêtre optique sur le système de sonde et des organes de fixation de la bride de retenue sur le système de sonde ;
- la fenêtre optique est venue de matière avec l'embase ;
- il est intégralement réalisé à partir d'un matériau transparent à un rayonnement laser ;
- le hublot présente un diamètre compris entre 1 et 6 cm.

L'invention a en outre pour objet une sonde mixte de référence primaire pour aéronef, du type comprenant :
- au moins un système de sonde tel que décrit ci-dessus,
- une tête optique raccordée à un anémomètre laser et disposée en regard de la fenêtre optique du ou de chaque système de sonde, et
- un moyen de mesure de la pression raccordé à des prises de pression statique.

L'invention a par ailleurs pour objet un aéronef comprenant au moins une sonde mixte de référence primaire telle que décrite ci-dessus.

L'invention a enfin pour objet un procédé de mesure d'une pluralité de grandeurs physiques relatives à un aéronef, caractérisé en ce qu'il comprend les étapes suivantes de:
- fourniture d'une sonde mixte de référence primaire telle que décrite ci-dessus, sur la carlingue de l'aéronef,
- émission/réception d'un rayonnement laser depuis l'intérieur de l'aéronef vers l'extérieur de l'aéronef à travers la fenêtre optique via la tête optique d'anémomètre laser rapportée au ou à chaque système de sonde pour la mesure d'une vitesse de l'aéronef (6),
- mesure d'une pression statique aux abords de l'aéronef via les prises de pression statique du ou de chaque système de sonde.

L'invention sera mieux comprise à la lecture de la description qui va suivre, donnée uniquement à titre d'exemple et faite en se référant aux dessins suivants, sur lesquels :
- la Figure 1 est une vue de face d'un système de sonde selon un premier mode de réalisation de l'invention ;
- la Figure 2 est une vue de derrière d'un système de sonde selon le premier mode de réalisation de l'invention ;
- la Figure 3 est une vue en coupe d'un système de sonde selon le premier mode de réalisation de l'invention disposé sur la carlingue d'un aéronef ;
- la Figure 4 est un diagramme bloc d'un procédé de mesure via une sonde mixte de référence primaire selon l'invention ; et
- la Figure 5 est une vue analogue à la vue de la Figure 1 d'un système de sonde selon un troisième mode de réalisation de l'invention.

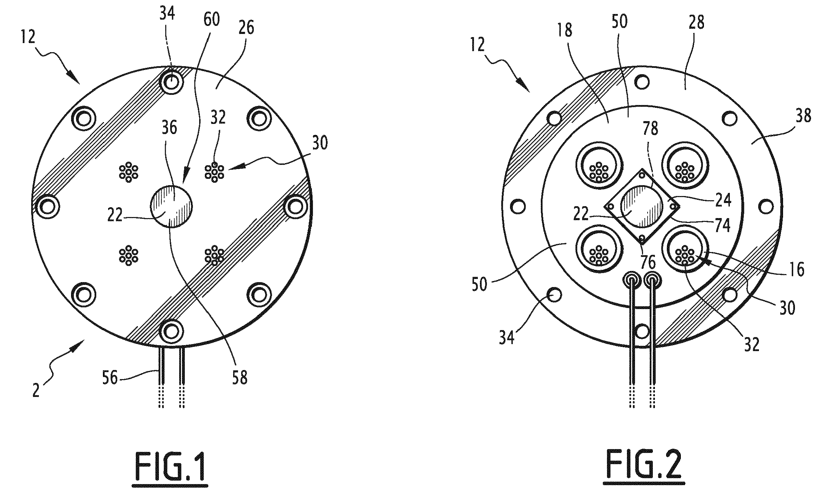

Les Figures 1, 2 et 3 illustrent un système de sonde selon un premier mode de réalisation de l'invention.

Le système de sonde 2 selon l'invention est propre à permettre l'adjonction d'une tête optique 4 raccordée à un anémomètre laser (non visible), ou sonde LIDAR pour Light Détection and Ranging, à une sonde de pression statique connue en soi. A ce titre, la description de la sonde de pression statique et de moyens de mesure de pression auxquels elle est raccordée est donnée afin de faciliter la compréhension.

Un tel système 2 est destiné à être monté sur un aéronef 6. Cet aéronef 6 comprend un fuselage ou carlingue 8 dans laquelle est ménagé un hublot 10 destiné à recevoir le système de sonde 2 selon l'invention.

En règle générale, les aéronefs présentent au moins deux sondes de pression statique, situées de part et d'autre sur une partie de la carlingue parallèle à l'écoulement.

Si l'aéronef est un avion de ligne, ces sondes sont par exemple disposées de chaque côté de la carlingue, sur les parties de celle-ci se situant devant les ailes.

Cette position correspond à une zone dans laquelle l'écoulement est peu perturbé par l'aéronef. La mesure de pression obtenue via ces sondes approche ainsi la valeur de pression qui serait mesurée en l'absence de l'aéronef, ou tout au moins corrigeable aisément.

Le système de sonde 2 selon l'invention comprend une embase 12 et des moyens 14 de fixation de l'embase 12 sur la carlingue 8. Le système de sonde 2 comprend également des manchons de raccord 16, une zone de dégivrage 18 qui contient un système de dégivrage 20, une fenêtre optique 22, et des moyens de fixation 24 de la fenêtre optique 22 sur le système de sonde 2.

L'embase 12 est propre à être fixée sur la carlingue 8 dans le hublot 10 qui présente des dimensions complémentaires de celles de l'embase 12.

De manière connue, l'embase 12 présente une forme générale ovoïde ou circulaire.

Dans l'exemple des Figures 1 et 2, l'embase 12 présente une forme générale circulaire et présente un axe central A-A'.

En outre, l'embase 12 est réalisée à partir d'un matériau rigide adapté aux contraintes mécaniques, thermiques et atmosphériques rencontrées lors du fonctionnement de l'aéronef 6. De manière connue, l'embase 12 est par exemple réalisée à partir d'un alliage métallique, par exemple d'aluminium, de céramique ou de tout autre matériau certifié pour l'aéronautique.

D'autres variantes sont envisageables dans lesquelles l'embase 12 est intégralement réalisée à partir d'un matériau transparent à un rayonnement laser, comme on le verra par la suite.

L'embase 12 comprend une surface externe 26 destinée à être au contact de l'atmosphère extérieure de l'aéronef, et une surface interne 28 destinée à être placée dans le hublot 10 en regard de l'espace intérieur de l'aéronef 6.

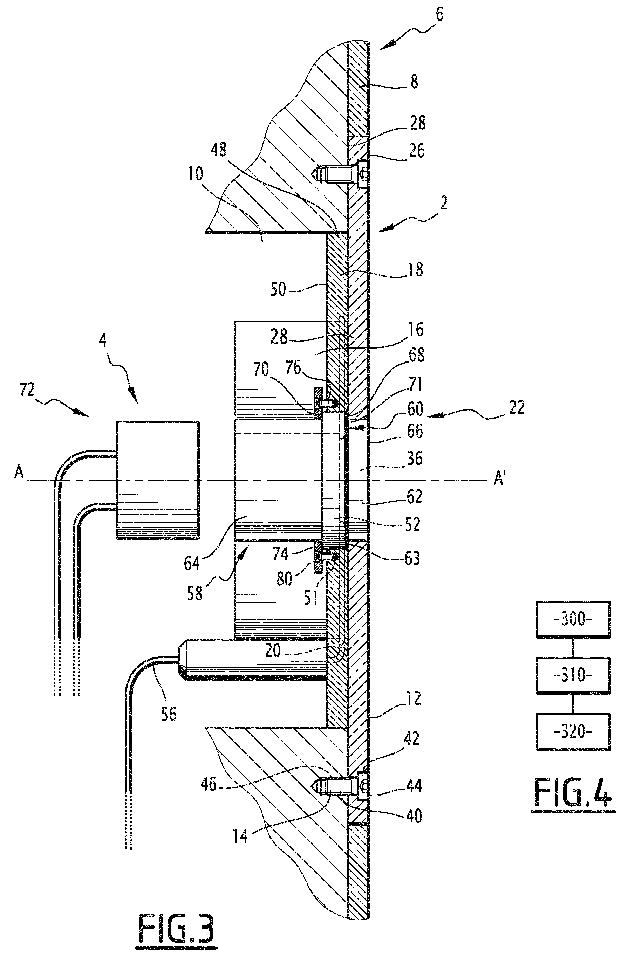

L'embase 12 définit des groupes 30 d'orifices de prise de pression statique 32, des orifices de réception 34 des moyens de fixation 14 et un orifice de réception 36 de la fenêtre optique 22 (trait de référence en pointillés sur la Figure 3).

La surface externe 26 de l'embase 12 est sensiblement plane et est propre à affleurer la surface externe du fuselage 8 de l'aéronef 6 lorsque l'embase 12 est fixée sur le fuselage 8.

Ce type de montage, dit montage « flush », est bien connu de l'homme du métier et est propre à minimiser la perturbation du champ de pression et de l'écoulement que la présence d'un objet ou d'une interface entre deux objets engendre à son voisinage.

Comme illustré sur la Figure 3, la surface interne 28 est sensiblement plane et parallèle à la surface externe 26 de l'embase 12.

En outre, cette surface interne 28 est orientée vers l'intérieur de l'aéronef 6.

Les orifices de prise de pression statique 32 sont propres à permettre à l'atmosphère extérieure à l'aéronef 6 de pénétrer dans la sonde 2. Ils portent le nom de ports statiques ou de prises de pression statique. Ils seront désignés ci-après par l'expression « prises de pression statique ».

Les prises de pression statique 32 sont ménagées dans l'épaisseur de l'embase 12 et sont raccordés à des moyens de mesure de la pression statique (non visibles), comme on le verra par la suite. Ils débouchent dans la surface externe 26 et dans la surface interne 28.

Les prises de pression statique 32 présentent une forme générale circulaire et sont disposés sur l'embase 12 sous la forme de groupes 30.

Dans l'exemple de la Figure 1, l'embase 12 comprend ainsi quatre groupes 30 de plusieurs prises de pression statique 32 (7 dans l'exemple de la Figure 2) régulièrement espacées autour de l'axe central A-A'.

Les prises de pression statique 32 de chaque groupe 30 sont alors disposées de façon à occuper les sommets d'un polygone régulier, par exemple un hexagone, l'une des prises de pression statique 32 se trouvant au centre du polygone.

Chaque groupe 30 de prises 32 est alors compris dans le cercle circonscrit au polygone que les prises 32 définissent.

Les orifices de réception 34 des moyens de fixation 14 sont ménagés à travers une bride périphérique 38 délimitée à la périphérie de l'embase 12.

Ils sont propres à minimiser la portion des moyens de fixation 14 faisant saillie hors de l'embase 12.

A cet effet, chaque orifice de réception 34 est de forme sensiblement complémentaire à la forme des moyens de fixation 14, comme on le verra par la suite.

Ces orifices de réception 34 sont situés sur la périphérie de l'embase 12 et sont avantageusement espacés angulairement de façon régulière autour de l'axe central A-A'.

Dans l'exemple de la Figure 1, l'embase 12 présente ainsi huit orifices de réception 34 des moyens de fixation 14.

L'orifice de réception 36 de la fenêtre optique 22 présente une forme complémentaire à celle de la fenêtre optique 22.

L'orifice de réception 36 est ménagé à travers l'embase 12 et débouche dans la surface externe 26 et dans la surface interne 28.

Dans l'exemple illustré sur la Figure 3, l'orifice de réception 36 présente une forme générale cylindrique d'axe central A-A'.

En outre, l'orifice de réception 36 de la fenêtre optique 22 est situé sur l'embase 12 à un emplacement propre à minimiser les perturbations de pression et d'écoulement engendrées par la présence de la fenêtre optique 22, comme on le verra par la suite.

Dans l'exemple des Figures 1 à 3, l'orifice de réception 36 est disposé au centre de l'embase 12.

Les moyens de fixation 14 comprennent une tête destinée à être totalement reçue dans l'un des orifices de réception correspondants selon un montage flush, c'est-à-dire de telle sorte que ladite tête affleure la surface externe de l'embase.

Dans l'exemple de la Figure 1, ces moyens de fixation 14 comprennent par exemple des vis 40 à tête 42 plate. La tête 42 de chaque vis 40 présente une forme générale adaptée pour coopérer avec chaque orifice de réception 34 et présente également une surface plane 44 destinée à affleurer la surface externe 26.

Les vis 40 sont alors destinées à être mises en prise avec des manchons de retenue 46 (trait de référence en pointillés sur la Figure 3) ménagés dans la carlingue 8.

Les manchons de raccord 16 sont destinés à être montés de façon hermétique sur une canalisation dite « de pression statique » (non visible) raccordée à des moyens de mesure de la pression (non visibles) auxquels est transmise la pression atmosphérique qui pénètre la sonde 2 via les prises de pression statique 32.

A cet effet, chaque manchon 16 présente une forme générale cylindrique d'axe respectif sensiblement parallèle à l'axe central A-A'. Chaque manchon 16 est placé autour d'un groupe 30 de prises de pression statique 32.

Chaque manchon 16 présente un diamètre supérieur au diamètre des cercles respectivement circonscrits à chacun des groupes 30 de prises de pression statique 32.

Chaque manchon 16 est fixé sur la surface interne 28 de l'embase 12 en regard d'un groupe 30 de prises de pression statique 32, ce groupe 30 de prises de pression statique 32 débouchant dans le manchon 16.

La ligne statique raccordée audit manchon 16 est ainsi soumise à une atmosphère présentant sensiblement la pression qui règne à l'extérieur de l'aéronef 6.

De manière connue, la canalisation de pression statique présente une forme tubulaire. Elle se présente par exemple sous la forme d'un tube rigide ou souple raccordé à des moyens de mesure de pression. Le tube est par exemple métallique.

De façon connue également, ces moyens de mesure de pression comprennent par exemple un module (non représenté) de mesure de données de vol disposé à proximité de la sonde 2. Le module désigné par l'acronyme anglais ADM, pour Air Data Module, transforme l'information de pression fournie par la sonde 2 en une information numérique. Cette information numérique est ensuite transmise, par exemple via un bus de communication, à un calculateur anémobarométrique de données de vol ou à une centrale de références inertielles et anémobarométriques.

Ces centrales et calculateurs équipent les aéronefs généralement dotés de commandes de vol électriques et ont pour fonction de centraliser les données de vol générées par les différentes sondes que comprend l'aéronef.

L'information centralisée est ensuite affichée par exemple via l'EFIS de l'aéronef aux pilotes et/ou co-pilotes à qui elle sert de support pour le pilotage de l'aéronef. L'information centralisée est également transmise à de nombreux équipements de l'avion.

La zone de dégivrage 18 est propre à accueillir le système de dégivrage 20 du système de sonde 2. En outre, elle reçoit la fenêtre optique 22 et est traversée par les manchons de raccord 16.

La zone de dégivrage 18 présente une forme générale cylindrique d'axe A-A' et de diamètre inférieur au diamètre de l'embase 12. Elle est réalisée dans un matériau semblable au matériau de l'embase 12.

En outre, la zone de dégivrage 18 est fixée sur la surface interne 28 de l'embase 12.

Dans l'exemple des Figures 2 et 3, elle est par exemple soudée sur ladite surface interne 28.

La zone de dégivrage 18 est délimitée longitudinalement à l'opposé de l'embase 12 par une paroi 50 dans laquelle sont ménagées des lumières de passage 51 (trait de référence en pointillés sur la Figure 3) des moyens de fixation 24 de la fenêtre optique 22.

Ces lumières de passage 51 sont adaptées pour recevoir de manière complémentaire les moyens de fixation 24.

Dans l'exemple de la Figure 2, les moyens de fixation 24 comprennent des vis destinées à être montées dans un filetage disposé dans la lumière de passage 51 correspondante.

La zone de dégivrage 18 comprend également un logement 52 (trait de référence en pointillés sur la Figure 3) d'insertion de la fenêtre optique 22. Les lumières de passage 51 sont régulièrement disposées autour du logement 52.

Le logement 52 de la fenêtre optique 22 est traversant. Il est en outre situé en regard de l'orifice de réception 36 de la fenêtre optique 22 ménagé sur l'embase 12.

Dans l'exemple de la Figure 3, le logement 52 présente une forme générale cylindrique de dimensions supérieures aux dimensions de l'orifice de réception 36 de la fenêtre optique 22 sur l'embase 12 et est destiné à la réception d'une partie intermédiaire portée par la fenêtre optique 22, comme on le verra par la suite.

La hauteur de la zone de dégivrage 18 selon l'axe central A-A' est sensiblement égale à l'épaisseur de l'embase 12.

Enfin, et comme illustré sur la Figure 3, sur la paroi 50 débouchent des moyens d'alimentation 56 du système de dégivrage 20.

De manière connue, le système de dégivrage 20 du système de sonde 2 est propre à désobstruer les prises de pression statique 32 lorsque celles-ci sont obstruées par de la glace ou du givre.

A cet effet, il comprend des résistances électriques ou un ou plusieurs fils résistifs raccordés aux moyens d'alimentation 56 et noyés dans le matériau de la zone de dégivrage 18.

Dans l'exemple des Figures 1 à 3, le système de dégivrage 20 comprend une pluralité de fils résistifs enroulés autour de portions des manchons de raccord 16 situées dans la zone de dégivrage 18.

Lors de l'alimentation électrique du système de dégivrage 20, les fils chauffent la zone de dégivrage 18 autour des prises de pression statique 32 afin de faire fondre la glace ou le givre les obstruant.

La fenêtre optique 22 est propre à permettre le passage d'un rayonnement laser utilisé par une sonde LIDAR pour réaliser une mesure de vitesse tout en minimisant les perturbations du champ de pression et de l'écoulement que sa présence engendre.

La position exacte de la fenêtre optique 22 sur l'embase 12 est calculée puis testée pour minimiser les perturbations du champ de pression et de l'écoulement.

Aussi, en référence aux Figures 1 à 3, la fenêtre optique 22 est représentée au centre de l'embase 12 mais peut être disposée sur celle-ci à un endroit plus adapté défini par ces calculs et essais.

La fenêtre optique 22 comprend un hublot 58 transparent à un rayonnement laser et des moyens d'étanchéification 60.

Le hublot 58 est réalisé à partir d'un matériau optique adapté à un rayonnement laser de longueur d'onde sensiblement égale à 1550 nm. Il est reçu à travers l'embase 12.

Dans le système de sonde 2 selon l'invention, le hublot 58 est avantageusement réalisé à partir de verre transparent à un rayonnement infrarouge, comme par exemple un rayonnement de longueur d'onde sensiblement égale 1550 nm.

Lorsqu'il est monté sur l'embase 12, le hublot 58 affleure la surface externe 26 de l'embase 12.

Comme illustré par la Figure 3, le hublot 58 comprend une partie externe 62 cylindrique, une partie intermédiaire 63 annulaire entourant la partie externe 62, et une partie interne 64 également cylindrique disposée dans le hublot 10 de réception de l'embase 12 sur la carlingue 8.

Les parties externe 62, intermédiaire 63 et interne 64 sont venues de matière. Elles sont coaxiales d'axe l'axe central A-A' et cylindriques.

La partie externe 62 est reçue à travers l'orifice de réception 36. Elle présente une face plane 66 qui affleure la surface externe 26 de l'embase 12 et se trouve au contact de l'atmosphère extérieure à l'aéronef 6.

De fait, lorsque l'aéronef 6 est en vol, la face plane 66 est soumise à une pression inférieure à la pression à laquelle est soumise la partie interne 64 du hublot 58.

Cette différence de pression engendre une force appliquée sur le hublot 58 qui tend à maintenir la partie externe 62 engagée dans les orifices de réception 36, 52 de la fenêtre optique 22.

La partie intermédiaire 63 présente un diamètre supérieur à ceux de la partie externe 62 et de la partie interne 64.

La partie intermédiaire 63 présente une face avant 68 tournée vers l'embase 12 et une face arrière 70 tournée vers l'intérieur de l'aéronef 6. La face avant 68 et la face arrière 70 sont toutes deux disposées radialement.

La partie intermédiaire 63 est reçue dans le logement 52. Sa face avant 68 prend appui sur la surface interne 28 de l'embase 12. Les moyens de fixation 24 serrent la partie intermédiaire 63 contre l'embase 12.

Lorsque l'aéronef 6 est en vol, la différence de pression tend à plaquer la partie intermédiaire 63 contre la surface interne 28 de l'embase 12.

Les moyens d'étanchéification 60 sont propres à assurer l'étanchéité de la fenêtre optique 22 et à compenser la dilatation thermique relative du hublot 58 et de l'embase 12.

A cet effet, les moyens d'étanchéification 60 comprennent un joint 71 annulaire disposé autour de la partie externe 62 du hublot 58. Le joint 71 est disposé axialement entre la partie intermédiaire 63 et l'embase 12.

Lorsque la fenêtre optique 22 est disposée sur l'embase 12, la partie intermédiaire 63 est en appui sur la surface interne 28 de l'embase 12 par l'intermédiaire du joint 71. Il isole ainsi l'orifice 36 de l'intérieur de l'aéronef 6.

Le joint 71 est réalisé de manière à présenter un coefficient de dilatation thermique inférieur à celui du matériau de l'embase 12.

Le joint 71 comprend un anneau d'INVAR, qui est un alliage de fer et de nickel de faible coefficient de dilatation thermique également connu sous le nom de Fe-Ni36%. L'anneau est enrobé d'une gaine de caoutchouc dur présentant également un faible coefficient de dilatation thermique.

L'épaisseur de l'anneau d'INVAR est alors déterminée en fonction de la tolérance souhaitée aux défauts de planéité du système de sonde 2, de l'épaisseur de l'embase 12, de son coefficient de dilatation thermique et du coefficient de dilatation thermique du hublot 58.

En variante, le joint 71 comprend un empilement de trois anneaux coaxiaux de même diamètre dont l'anneau central est réalisé à partir d'INVAR et dont les deux autres anneaux sont en caoutchouc.

La présence du joint 71 a ainsi pour effet que lorsque l'embase 12 se dilate et que l'orifice de réception 36 et le logement 52 se déforment, le hublot 58 se déplace peu le long de l'axe central A-A' dans l'orifice de réception 36. L'alignement de la face plane 66 du hublot 58 et de la surface externe 26 de l'embase 12 est alors conservé. Ainsi, le caractère flush du montage de la fenêtre optique 22 sur l'embase 12 et l'étanchéité de la fenêtre optique 22 sont conservés.

La fenêtre optique 22 du système de sonde selon l'invention 2 est placée en regard d'une tête optique 4 de réception et d'émission raccordée à un anémomètre laser pour fournir une sonde mixte de référence primaire 72 supplémentaire de l'aéronef 6.

En variante, la fenêtre optique 22 est intégrée à la tête optique 4.

De tels anémomètres sont par exemple décrits dans les documents FR 2 953 934 et FR 2 725 034.

Ces sondes désignées par exemple par l'acronyme LIDAR sont couramment utilisées en aéronautique et reposent sur l'émission d'un ou plusieurs faisceaux lumineux selon un ou plusieurs axes de mesure. Les rayonnements émis sont focalisés par la sonde dans un volume d'air distant de l'aéronef - on parle de mesure en champ distant, à l'inverse des sondes de Pitot ou de pression statique qui effectuent des mesures en champ proche -. Le volume d'air distant est par exemple situé à une distance supérieure à celle de la surface extérieure. Les particules en suspension dans le volume d'air dans lequel la mesure est réalisée diffusent une partie du rayonnement en direction de la tête optique de la sonde LIDAR.

Les propriétés du rayonnement diffusé sont alors utilisées par la sonde LIDAR pour fournir - via un dispositif d'interférométrie par exemple - une mesure de la vitesse relative de l'aéronef selon le ou les axes de mesure.

De façon connue, la sonde anémométrique comprend un dispositif de génération d'un rayonnement laser. Le rayonnement est ensuite amplifié puis relayé à une tête optique disposée en regard de la fenêtre.

Le rayonnement généré par la sonde LIDAR est ainsi émis par la tête optique et diffusé en direction de celle-ci à travers la fenêtre.

Dans le système de sonde selon l'invention 2, la tête optique 4 d'une sonde LIDAR est fixée en regard de la fenêtre optique 22 ménagée sur l'embase 12 via des moyens de fixation (non représentés) de la tête optique 4.

La fenêtre optique 22 disposée sur l'embase 12 autorise alors l'émission et la réception à travers la sonde de pression statique des faisceaux utilisés par la sonde LIDAR à laquelle est raccordée la tête optique 4.

En outre, les dimensions de la fenêtre optique 22 sont adaptées à la tête optique 4 rapportée au système de sonde selon l'invention.

Préférentiellement, le diamètre du hublot 58 de la fenêtre optique 22 est compris entre 1 cm et 6 cm.

Le système de sonde selon l'invention 2 autorise l'adjonction d'une tête optique 4 d'émission/réception de LIDAR à une sonde de pression statique sans modifier la géométrie de celle-ci, et par conséquent sans nécessiter de nouvelle certification de la sonde de pression ainsi modifiée.

Le système de sonde selon l'invention 2 permet ainsi de bénéficier d'une sonde mixte de référence primaire 72 supplémentaire sans modifier la peau de l'aéronef 6.

En outre, un système de sonde selon l'invention 2 peut alors être monté sur l'aéronef 6 lorsque celui-ci est déjà en cours d'exploitation, en remplacement d'une sonde de pression statique classique qu'il comprend.

Par ailleurs, les sondes LIDAR se situant sous la peau de l'aéronef 6, elles ne sont pas sujettes aux défaillances auxquelles les sondes protubérantes sont exposées, et présentent donc une disponibilité améliorée.

Les moyens de fixation 24 de la fenêtre optique 22 comprennent une bride 74 de retenue de la fenêtre optique 22 et des vis 76 de fixation de la bride de retenue 74 sur la paroi 50.

La bride de retenue 74 est sensiblement plane et présente par exemple une forme générale polygonale telle carrée.

Elle délimite une ouverture de réception 78 de la fenêtre optique 22 et des lumières de passage 80 (trait de référence en pointillés sur la Figure 3) des vis de fixation 76.

Comme illustré sur la Figure 2, l'ouverture de réception 78 reçoit la partie interne 64 du hublot 58.

Les lumières de passage 80 des vis de fixation 76 sont disposées aux coins de la bride de retenue 74. Elles sont mises en regard des lumières de passage 51 ménagées sur la paroi 50.

La bride 74 est au contact de la face arrière 70 de la partie intermédiaire 63 du hublot. Lorsque les vis de fixation 76 sont engagées dans les lumières de passage 51, la bride de retenue 74 maintient la fenêtre optique 22 dans l'orifice de réception 36 et dans le logement 52 par coopération avec la face arrière 70 de la partie intermédiaire 63 du hublot 58 et avec la paroi 50. A noter que dans la mesure où la bride 74 n'est pas au contact de la paroi 50, il est préférable d'insérer une rondelle élastique ou un ressort élastique dans chacune des lumières de passage 80 visant à prévenir la déformation de la bride 74 lors de sa fixation.

En référence à la Figure 4, le procédé de mise en oeuvre d'une mesure via la sonde mixte de référence primaire 72 selon l'invention va maintenant être décrit.

Tout d'abord, au cours d'une étape 300, on adjoint à un système de sonde 2 selon l'invention une tête optique 4 d'anémomètre laser en la ménageant en regard de la fenêtre optique 22 du système de sonde 2.

Ensuite, comme décrit ci-dessus, une mesure de la pression statique aux abords de l'aéronef 6 est réalisée via les prises de pression statique 32 ménagées sur l'embase 12 au cours d'une étape 310.

Simultanément ou postérieurement, au cours d'une étape 320, une mesure d'une vitesse relative de l'aéronef 6 sur la carlingue 8 duquel le système de sonde 2 est fixé est réalisée via un rayonnement laser émis par la tête optique 4 depuis l'intérieur de la carlingue 8 à travers le hublot 58 de la fenêtre optique 22, réfléchi en direction de la fenêtre optique 22, puis capté par ladite tête 4 à travers ladite fenêtre optique 22.

Dans une première variante (non représentée) du système de sonde selon l'invention 2, l'embase 12 ne comprend pas de système de dégivrage 20 et de zone de dégivrage 18.

Cette variante est préférentiellement utilisée lorsque le système de sonde 2 est fixé sur un endroit de la carlingue 8 d'un aéronef 6 tel que les risques de givrage de la sonde 2 sont diminués.

La bride de retenue 74 de la fenêtre optique 22 est alors fixée sur la surface interne 28 de l'embase 12 et maintient la fenêtre optique 22 dans son orifice de réception 36 sur l'embase 12 par coopération avec la surface interne 28 de l'embase 12 et la face arrière 70 de la partie intermédiaire 63 du hublot 58.

Les lumières de passage 80 des vis de fixation 76 de la bride de retenue 74 sont alors ménagées dans la surface interne 28 de l'embase 12.

Dans une seconde variante (non représentée) du système de sonde selon l'invention 2, l'embase 12 est intégralement réalisée à partir d'un matériau transparent aux rayonnements laser utilisés par la sonde LIDAR rapportée à la fenêtre 22.

Le hublot 58 de la fenêtre optique 22 est venu de matière avec l'embase 12 et présente par exemple une forme cylindrique de hauteur égale à l'épaisseur de l'embase 12.

La face externe 66 du hublot 58 destinée à être au contact de l'atmosphère extérieure à l'aéronef 6 présente alors un traitement de surface spécifique, par exemple un polissage compatible avec la longueur d'onde sensiblement égale à 1550 nm du rayonnement utilisé par la sonde LIDAR rapportée à la fenêtre optique 22.

La fenêtre optique 22 présente ainsi la particularité de ne pas nécessiter de moyens d'étanchéification 60 et, étant venue de matière avec l'embase 12, ne présente pas d'interface avec celle-ci.

La présence de la fenêtre optique n'engendre donc aucune perturbation du champ de pression avoisinant, ce qui rend d'autant plus souple la position de la fenêtre optique sur l'embase 12.

De façon similaire à la variante précédente, cette variante est avantageusement utilisée lorsque le système de sonde 2 ne nécessite pas d'être dégivré.

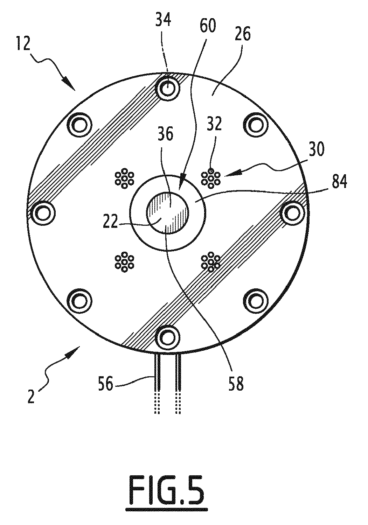

En référence à la Figure 5, dans une troisième variante, outre le joint 71, les moyens d'étanchéification 60 comprennent également un insert 84 de forme générale annulaire.

Le joint 71 est alors réalisé à partir d'un matériau étanche bien connu de l'homme du métier, tel qu'un composite de caoutchouc dur et ne nécessite pas de disposer d'un coefficient de dilatation thermique inférieur celui du matériau de l'embase 12.

L'insert 84 présente une épaisseur sensiblement égale à l'épaisseur de l'embase 12 et est reçu dans l'orifice de réception 36. L'insert est solidarisé à l'embase 12, par exemple par soudage et/ou emmanchage à force.

L'insert 84 présente un orifice central de forme cylindrique et de dimensions complémentaires de celles de la partie externe 62 du hublot 58. La partie externe 62 du hublot 58 est reçue dans l'orifice central de l'insert 84. Le joint 71 est situé dans le logement 52 et au contact de l'arrière de l'insert 84.

Dans cet exemple, l'insert est réalisé à partir d'un alliage de Fer, Nickel et Cobalt de coefficient de dilatation thermique proche de celui du matériau du hublot 58. L'alliage est par exemple du KOVAR.

Plus précisément, la différence entre le coefficient de dilatation thermique de l'insert 84 et celui du hublot 58 est avantageusement inférieure à 100 %.

Ainsi, lorsque le matériau de l'embase 12 se dilate, l'insert 84 empêche le déplacement du hublot 58 le long de l'axe central A-A', et le caractère flush du montage de la fenêtre optique 22 sur l'embase 12 est conservé.

Dans une quatrième variante (non représentée), l'embase 12 est intégralement réalisée à partir d'un alliage de Fer, Nickel et Cobalt de coefficient de dilatation thermique proche de celui du matériau du hublot 58. L'alliage est par exemple du KOVAR.

Ceci a pour effet que le hublot 56 ne se déplace pas le long de l'axe central A-A' lors de la dilatation du matériau de l'embase, de sorte que le caractère flush du montage de la fenêtre optique 22 sur l'embase 12 est conservé.

## Revendications

1. Système de sonde (2), comportant :
- une embase (12) destinée à être fixée sur la carlingue (8) d'un aéronef (6), et
- une pluralité de prises de pression statique (32) régulièrement espacées, ménagées à travers l'embase (12) et destinées à être raccordées à des moyens de mesure de la pression,
**caractérisé en ce que** le système (2) comprend en outre au moins une fenêtre optique (22) transparente à un rayonnement laser et insérée dans l'embase (12).

2. Système (2) selon la revendication 1, **caractérisée en ce que** la fenêtre optique (22) présente une face externe (66) affleurant une surface externe (26) de l'embase (12).

3. Système (2) selon la revendication 1 ou 2, **caractérisée en ce que** la fenêtre optique (22) comprend un hublot (58) réalisé à partir de verre transparent aux rayonnements infrarouges.

4. Système (2) selon la revendication 3, **caractérisé en ce que** la fenêtre optique (22) comprend des moyens d'étanchéification (60) comprenant un joint (71) inséré entre l'embase (12) et le hublot (58), et **en ce que** le joint (71) est réalisé à partir d'un matériau de coefficient de dilatation thermique inférieur au coefficient de dilatation thermique du matériau de l'embase (12).

5. Système (2) selon la revendication 3 ou 4, **caractérisé en ce que** la fenêtre optique (22) comprend des moyens d'étanchéification (60) comprenant un insert (84) solidaire de l'embase (12) et dans lequel est reçu le hublot (58), la différence entre le coefficient de dilatation thermique de l'insert (84) et celui du hublot (58) étant avantageusement inférieure à 100 %.

6. Système (2) selon l'une quelconque des revendications 3 à 5, **caractérisé en ce que** l'embase (12) définit un orifice de réception (36) de la fenêtre optique (22), le hublot (58) étant maintenu par engagement mécanique dans l'orifice de réception (36).

7. Système (2) selon l'une quelconque des revendications précédentes, **caractérisé en ce qu'**il comprend des moyens de fixation (24) de la fenêtre optique (22) sur l'embase (12), ces moyens de fixation (24) comprenant une bride de retenue (74) pour la retenue de la fenêtre optique (22) sur le système de sonde (2) et des organes de fixation (76) de la bride de retenue (74) sur le système de sonde (2).

8. Système (2) selon l'une quelconque des revendications précédentes, **caractérisé en ce que** la fenêtre optique (22) est venue de matière avec l'embase (12).

9. Système (2) selon la revendication 8, **caractérisé en ce qu'**il est intégralement réalisé à partir d'un matériau transparent à un rayonnement laser.

10. Système (2) selon la revendication 3, **caractérisé en ce que** le hublot (58) présente un diamètre compris entre 1 et 6 cm.

11. Sonde mixte de référence primaire (72) pour aéronef (6), du type comprenant :
- au moins un système de sonde (2) selon l'une quelconque des revendications précédentes,
- une tête optique (4) raccordée à un anémomètre laser et disposée en regard de la fenêtre optique (22) du ou de chaque système de sonde (2), et
- un moyen de mesure de la pression raccordé à des prises de pression statique (32).

12. Aéronef (6) comprenant au moins une sonde mixte de référence primaire (72) selon la revendication 11.

13. Procédé de mesure (82) d'une pluralité de grandeurs physiques relatives à un aéronef (6), **caractérisé en ce qu'**il comprend les étapes suivantes de:
- fourniture (300) d'une sonde mixte de référence primaire (72) selon la revendication 11, sur la carlingue (8) de l'aéronef (6),
- émission/réception (310) d'un rayonnement laser depuis l'intérieur de l'aéronef (6) vers l'extérieur de l'aéronef à travers la fenêtre optique (22) via la tête optique (4) d'anémomètre laser rapportée au ou à chaque système de sonde (2) pour la mesure d'une vitesse de l'aéronef (6),
- mesure (320) d'une pression statique aux abords de l'aéronef (6) via les prises de pression statique (32) du ou de chaque système de sonde (2).

## Patentansprüche

1. Sondensystem (2), aufweisend:
- einen Sockel (12), welcher dazu bestimmt ist, am Rumpf (8) eines Luftfahrzeugs (6) fixiert zu sein, und
- eine Mehrzahl an Abgriffstellen des statischen Drucks (32), welche in regelmäßigen Abständen voneinander angeordnet sind, welche durch den Sockel (12) hindurch vorgesehen sind und dazu bestimmt sind, mit Mitteln der Messung des Drucks verbunden zu sein,
**dadurch gekennzeichnet, dass** das System (2) ferner wenigstens ein optisches Fenster (22) aufweist, welches für einen Laserstrahl transparent ist und in den Sockel (12) eingebracht ist.

2. System (2) gemäß dem Anspruch 1, **dadurch gekennzeichnet, dass** das optische Fenster (22) eine Außenseite (66) aufweist, welche mit einer Außenfläche (26) des Sockels (12) bündig ist.

3. System (2) gemäß dem Anspruch 1 oder 2, **dadurch gekennzeichnet, dass** das optische Fenster (22) ein Bullauge (58) ist, welches aus für Infrarotstrahlen transparentem Glas realisiert ist.

4. System (2) gemäß dem Anspruch 3, **dadurch gekennzeichnet, dass** das optische Fenster (22) Mittel zum Abdichten (60) aufweist, welche eine Dichtung (71), die zwischen den Sockel (12) und das Bullauge (58) eingebracht ist, aufweist, und dass die Dichtung (71) aus einem Material mit einen thermischen Ausdehnungskoeffizienten, welcher kleiner als der thermische Ausdehnungskoeffizient des Materials des Sockels (12) ist, realisiert ist.

5. System gemäß dem Anspruch 3 oder 4, **dadurch gekennzeichnet, dass** das optische Fenster (22) Mittel zum Abdichten (60) aufweist, welche einen Einsatz (84) aufweisen, welcher mit dem Sockel (12) fest verbunden ist und in welchen das Bullauge (58) aufgenommen ist, wobei der Unterschied zwischen dem thermischen Ausdehnungskoeffizienten des Einsatzes (84) und dem des Bullauges (58) vorteilhafterweise kleiner als 100% ist.

6. System gemäß irgendeinem der Ansprüche 3 bis 5, **dadurch gekennzeichnet, dass** der Sockel (12) eine Öffnung zur Aufnahme (36) des optischen Fensters (22) definiert, wobei das Bullauge (58) mittels eines mechanischen Eingriffs in der Öffnung zur Aufnahmen (36) gehalten ist.

7. System gemäß irgendeinem der vorhergehenden Ansprüche, **dadurch gekennzeichnet, dass** es Mittel zum Befestigen (24) des optischen Fensters (22) an dem Sockel (12) aufweist, wobei diese Mittel zum Befestigen (24) einen Halteflansch zum Halten des optischen Fensters (22) an dem Sondensystem (2) und Elemente zur Befestigung (76) des Halteflanschs (74) an dem Sondensystem (2) aufweisen.

8. System (2) gemäß irgendeinem der vorhergehenden Ansprüche, **dadurch gekennzeichnet, dass** das optische Fenster (22) einstückig mit dem Sockel (12) ist.

9. System (2) gemäß dem Anspruch 8, **dadurch gekennzeichnet, dass** es integral aus einem für einen Laserstrahl transparenten Material realisiert ist.

10. System (2) gemäß dem Anspruch 3, **dadurch gekennzeichnet, dass** das Bullauge (58) einen Durchmesser aufweist, der zwischen 1 und 6 cm liegt.

11. Primärgrößen-Mischsonde (72) für ein Luftfahrzeug (6) von der Art, aufweisend:
- wenigstens ein Sondensystem (2) gemäß irgendeinem der vorhergehenden Ansprüche,
- einen optischen Kopf (4), welcher mit einem Laseranemometer verbunden ist und dem optischen Fenster (22) des oder jedem Sondensystem (2) gegenüberliegend angeordnet ist, und
- ein Mittel zur Messung des Drucks, welches mit den Abgriffstellen des statischen Drucks (32) verbunden ist.

12. Luftfahrzeug (6), aufweisend wenigstens eine Primärgrößen-Mischsonde (72) gemäß dem Anspruch 11.

13. Verfahren zur Messung (82) einer Mehrzahl von ein Luftfahrzeug (6) betreffenden physikalischen Größen, **dadurch gekennzeichnet, dass** es aufweist die folgenden Schritte der:
- Bereitstellung (300) einer Primärgrößen-Mischsonde (72) gemäß dem Anspruch 11 an dem Rumpf (8) des Luftfahrzeugs (6),
- Aussendung/Empfang (310) eines Laserstrahls von dem Inneren des Luftfahrzeugs (6) in Richtung der Außenseite des Luftfahrzeugs durch das optische Fenster (22) hindurch mittels des optischen Kopfs (4) des Laseranemometers, welcher in das oder jedes Sondensystem (2) eingebracht ist, zur Messung einer Geschwindigkeit des Luftfahrzeugs (6),
- Messung (320) eines statischen Drucks im Umfeld des Luftfahrzeugs (6) mittels der Abgriffstellen des statischen Drucks (32) des oder eines jeden Sondensystems (2).

## Claims

1. A probe system (2), comprising:
- a base (12) designed to be fastened on the cockpit (8) of an aircraft (6), and
- a plurality of regularly spaced static pressure taps (32), arranged through the base (12) and designed to be connected to means for measuring the pressure,
**characterized in that** the system (2) comprises at least one optical window (22) transparent to laser radiation and inserted into the base (12).

2. The system (2) according to claim 1, **characterized in that** the optical window (22) has an outer face (66) flush with an outer surface (26) of the base (12).

3. The system (2) according to claim 1 or 2, **characterized in that** the optical window (22) comprises a porthole (58) made from glass transparent to infrared radiation.

4. The system (2) according to claim 3, **characterized in that** the optical window (22) comprises sealing means (60) comprising a seal (71) inserted between the base (12) and the porthole (58), and **in that** the seal (71) is made from a material with a thermal expansion coefficient lower than the thermal expansion coefficient of the material of the base (12).

5. The system (2) according to claim 3 or 4, **characterized in that** the optical window (22) comprises sealing means (60) comprising an insert (84) secured to the base (12) and in which the porthole (58) is received, the difference between the thermal expansion coefficient of the insert (84) and that of the porthole (58) advantageously being below 100%.

6. The system (2) according to any one of claims 3 to 5, **characterized in that** the base (12) defines an orifice (36) for receiving the optical window (22), the porthole (58) being maintained by mechanical engagement in the receiving orifice (36).

7. The system (2) according to any one of the preceding claims, **characterized in that** it comprises means (24) for fastening the optical window (22) on the base (12), said fastening means (24) comprising a retaining flange (74) for retaining the optical window (22) on the probe system (2) and members (76) for fastening the retaining flange (74) on the probe system (2).

8. The system (2) according to any one of the preceding claims, **characterized in that** the optical window (22) is integral with the base (12).

9. The system (2) according to claim 8, **characterized in that** it is made entirely from a material transparent to laser radiation.

10. The system (2) according to claim 3, **characterized in that** the porthole (58) has a diameter comprised between 1 and 6 cm.

11. A mixed primary reference probe (72) for an aircraft (6), of the type comprising:
- at least one probe system (2) according to any one of the preceding claims,
- an optical head (4) connected to a laser anemometer and arranged face to the optical window (22) of the or each probe system (2), and
- pressure measuring means connected to static pressure taps (32).

12. An aircraft (6) comprising at least one mixed primary reference probe (72) according to claim 11.

13. A method for measuring (82) a plurality of physical properties relative to an aircraft (6), **characterized in that** it comprises the following steps:
- providing (300) a primary mixed reference probe (72) according to claim 11, on the cockpit (8) of the aircraft (6),
- sending/receiving (310) laser radiation from the inside of the aircraft (6) to the outside of the aircraft through the optical window (22) via the laser anemometer optical head (4) attached to the or each probe system (2) to measure a speed of the aircraft (6),
- measuring (320) a static pressure near the aircraft (6) via the static pressure taps (32) of the or each probe system (2).
